# EUROPEAN PATENT APPLICATION

(11) **EP 2 830 013 A1**
(43) Date of publication of application: **28.01.2015**
(21) Application number: 14178293.8
(22) Date of filing: 24.07.2014
(51) Int. Cl.: G06Q 30/02, G06T 19/00

(54) **Apparatus, methods, computer programs suitable for enabling in-shop demonstrations**

(30) Priority: 25.07.2013 GB 201313265
(71) Applicant: Nokia Corporation, 02610 Espoo (FI)
(72) Inventor: Thomas, James, Hampshire, GU35 9PA (GB); Lou, Tyrone, 02610 Espoo (FI); Wan, Chun-Yip, 02610 Espoo (FI); Wharton, Alistair, Godalming, Surrey GU7 2AS (GB)
(74) Representative: Nokia Corporation

(57) **Abstract**

A functionally limited apparatus configured to enable, at a remote apparatus, an augmented reality, the apparatus comprising: a body; and computer visible features configured to control augmented reality output at the remote apparatus.

## Description

### TECHNOLOGICAL FIELD

Embodiments of the present invention relate to apparatus, methods, computer programs suitable for enabling in-shop demonstrations.

### BACKGROUND

Consider the following example scenario- a shopper wishes to try a product in a shop before purchasing the product.

A traditional solution to this requirement is to anticipate this need and to present a functional product in the shop as an in-shop demonstrator. The shopper can operate the functional product in the shop. When a purchase decision is made the user buys a functional product that is the same as the product operated in the shop but does not purchase the actual product operated in the shop which remains as an in-shop demonstrator.

### BRIEF SUMMARY

According to various, but not necessarily all, embodiments of the invention there is provided a functionally limited apparatus configured to enable, at a remote apparatus, an augmented reality, the apparatus comprising: a body; and computer visible features configured to control augmented reality output at the remote apparatus.

According to various, but not necessarily all, embodiments of the invention there is provided an apparatus comprising: a camera configured to capture contemporaneous images; a computer vision module configured to analyze the captured images and locate a limited functionality apparatus within the images; and an augmented reality module configured to modify the captured images to augment, in the images, the apparent functionality of the located functionally limited apparatus; and a display configured to display the modified images to simulate an augmented reality.

According to various, but not necessarily all, embodiments of the invention there is provided a computer program configured to control augmented reality output at a remote apparatus to simulate, at the remote apparatus, an augmented reality, wherein the computer program when loaded into a processor enables: causing analysis of captured images to locate within the captured images a limited functionality apparatus; causing modification of the images to augment the apparent functionality of the functionally limited apparatus in the modified images; and causing display of the modified images to provide an augmented reality.

According to various, but not necessarily all, embodiments of the invention there is provided a method comprising: causing analysis of captured images to locate within the captured images a limited functionality apparatus; causing modification of the images to augment the apparent functionality of the functionally limited apparatus in the modified images; and causing display of the modified images to provide an augmented reality.

According to various, but not necessarily all, embodiments of the invention there is provided an apparatus comprising: means for automatically analyzing captured images and locating a limited functionality apparatus within the images; and means for automatically modifying the captured images to augment, in the images, the apparent functionality of the located functionally limited apparatus; and means for automatically enabling display of the modified images.

### BRIEF DESCRIPTION

For a better understanding of various examples that are useful for understanding the brief description, reference will now be made by way of example only to the accompanying drawings in which:
Fig 1 illustrates an example of a system comprising a limited functionality apparatus and a remote imaging apparatus;
Fig 2A illustrates an example of content of a display of the remote imaging apparatus in the absence of augmented reality;
Fig 2B illustrates an example of content of a display of the remote imaging apparatus in the presence of augmented reality;
Fig 2C is an example illustrating user input at the simulated functional apparatus in augmented reality as a consequence of user action in relation to the limited functionality apparatus in real-life;
Fig 2D illustrates an example of content of a display of the remote imaging apparatus in the presence of augmented reality after the user input illustrated in Fig 3;
Fig 4 illustrates an example of an imaging apparatus; and
Fig 5 illustrates another example of an imaging apparatus.

### DETAILED DESCRIPTION

In the Background section, we considered the following example scenario- a shopper wishes to try a product in a shop before purchasing the product.

As previously described, a traditional solution to this requirement is to anticipate this need and to present a functional product in the shop as an in-shop demonstrator. The shopper can operate the functional product in the shop. When a purchase decision is made the user buys a functional product that is the same as the product operated in the shop but does not purchase the actual product operated in the shop which remains as an in-shop demonstrator.

A problem with this scenario is that the functional product presented in the shop and operated by shoppers cannot be sold for full retail value. Therefore presenting a functional product in a shop for shopper operation has a cost compared to selling that product.

The costs increase with the number of products presented for operation by shoppers.

The inventors have devised solutions to this problem using augmented reality.

In some but not necessarily all solutions, the shop, instead of presenting functional products as in-shop demonstrators for operation by shoppers, instead presents 'dummy' products that have limited functionality.

The dummy products may optionally be shaped and sized so that they are replicas of the functional product. However, they do not have all of the expensive electronics of the functional product.

The dummy products are used as a 'canvas' onto which an augmented reality is projected. The augmented reality simulates the operation of the functional product. Therefore in the augmented reality the dummy product appears to operate as a functional product. It may, for example, appear to display content in a manner similar to the functional product. It may, for example, appear to respond to user input in a manner similar to the functional product.

This augmented reality may, for example, be created automatically by imaging the dummy product using an imaging apparatus, this may be in a viewfinder of an imaging apparatus held by the customer.

The augmented reality is created by adapting images captured by the imaging apparatus (which include the dummy product) so that when the adapted images are contemporaneously displayed in the viewfinder of the imaging apparatus, parts of the dummy product appear as corresponding parts of the functional apparatus would appear in real-life. Thus a non-functional portion on a front face of the dummy product may appear as a functional display with the same user interface as the functional product when viewed through the imaging apparatus.

The imaging apparatus simulates operation of the functional apparatus and adapts the augmented reality accordingly.

When the user touches the dummy device it corresponds to touching the functional device within the augmented reality and may provide an operational user input. In the augmented reality, the display output of the functional apparatus as simulated within the augmented reality may change in response to this user input in the same way as the functional device would respond to the same user input in real-life.

The shopper is therefore able to trial operation of the functional product within the augmented reality, without the shop providing a functional product for operation in real-life.

The imaging device used to present the augmented reality may in some examples be the shopper's own imaging device. The software that enables the user's imaging device to provide an augmented reality simulating the functional device when the dummy device is imaged may be downloaded locally. The dummy device itself may, for example, enable the download.

Various examples will now be described with reference to the accompanying figures.

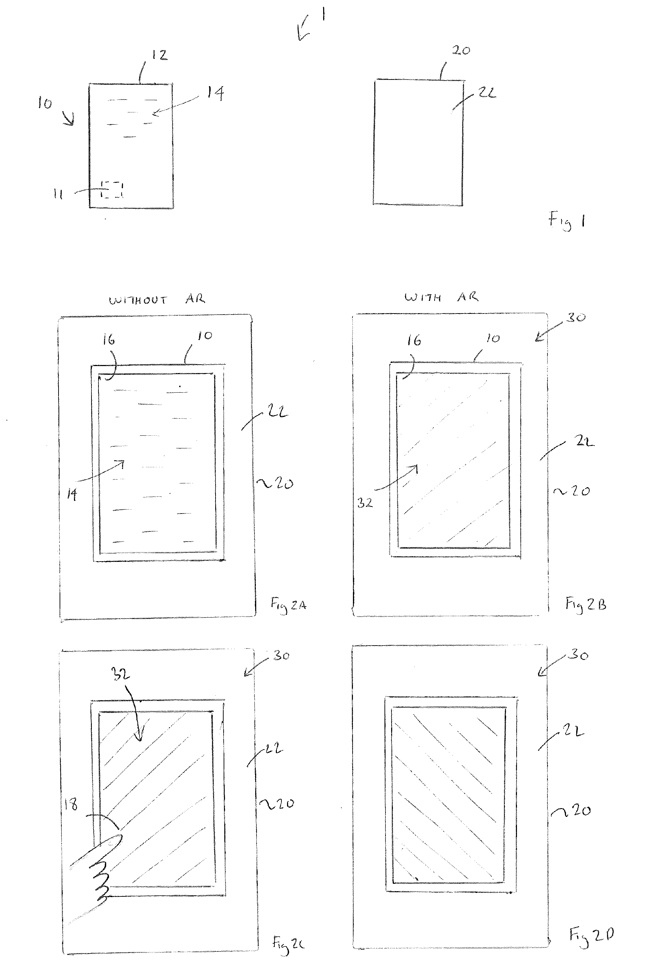

Fig 1 illustrates a system 1 which may be, for example. a point-of-sale system or an in-shop demonstration system that allows a user to trial a functional apparatus using augmented reality.

The system comprises a functionally limited apparatus 10 which is imaged using an imaging apparatus 20.

The functionally limited apparatus 10 is configured to enable, at the remote imaging apparatus 20, an augmented reality 30 (see Figure 2B, 2C, 2D).

The functionally limited apparatus 10 comprises a body 12; and computer visible features 14 configured to control augmented reality 30 output at the remote apparatus 20.

The functionally limited apparatus 10 has a reduced functionality compared to the functional apparatus which may be bought and used. The functionally limited apparatus 10 may, in some examples, be a dummy apparatus that has no functionality.

In some examples but not necessarily all examples, the body 12 replicates, in size and shape, a body of the functional apparatus.

In some examples but not necessarily all examples, the limited functionality apparatus 10 may be configured as a replica of the functional apparatus in mass and mass distribution.

The computer visible features 14 may be features that can be identified as feature points using computer vision.

The computer visible features 14 may be predetermined and be located at predetermined locations. This enables a machine such as a computer to identify automatically within images the presence of the limited functionality apparatus 10 and the orientation of the limited functionality apparatus 10 within the images.

Also illustrated in Fig 1 is an imaging apparatus 20 comprising a display 22. The imaging apparatus 20 is remote from the limited functionality apparatus 10 in that it is not connected to or a part of the limited functionality apparatus 10.

The imaging apparatus 20 may, for example, be separated between 20cm and 2m. The separation distance between the remote apparatus 20 and the limited functionality apparatus 10 may, in some examples, be determined by
the focal length of the camera used by the imaging apparatus 20 and the display used as a viewfinder by the imaging apparatus 20. The distance then being chosen so that all or a part of the limited functionality apparatus 10 is imaged within the viewfinder.

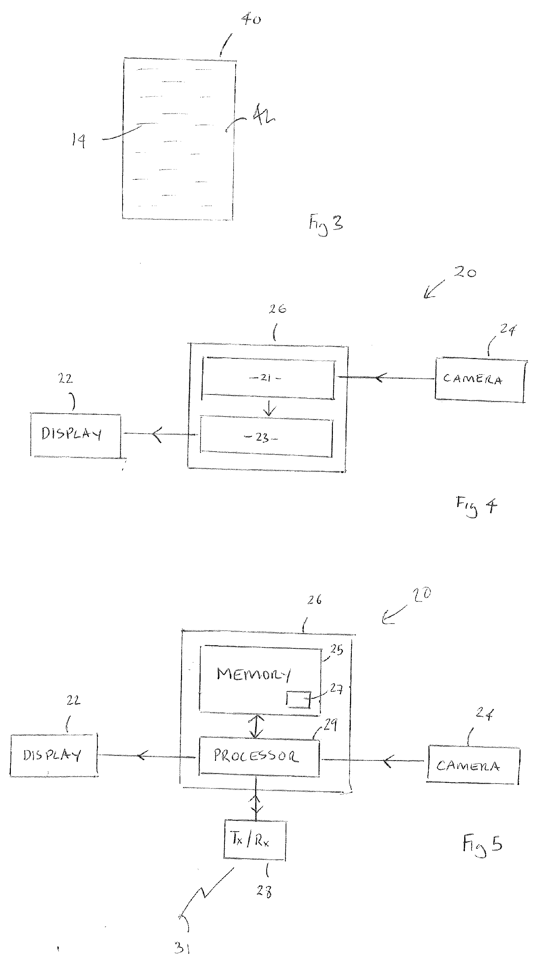

Fig 4 illustrates one example of an imaging apparatus 20 in more detail. This imaging apparatus 20 comprises: a camera 24; circuitry 26 which provides a computer vision module 21 and an augmented reality module 23 ; and a display 22.

The camera 24 is configured to capture contemporaneous images. Capture in this sense means that data representing the image is stored for further processing. This storage may be temporary storage in a buffer memory (temporary capture) or longer-term storage in an addressable memory (retrievable capture). Contemporaneous means that the images are captured and processed in real-time with very little latency.

The user of the imaging apparatus 20 directs the imaging apparatus 20 so that the images captured include a whole or a part of the limited functionality apparatus 10.

The computer vision module 21 is configured to analyze automatically the captured images and locate the limited functionality apparatus 10 within the images.

The augmented reality module 23 is configured to modify the captured images. This modification may augment, in the images, the apparent functionality of the located functionally limited apparatus 10. This creates an augmented reality in which the functionally limited apparatus 10 appears to have functionality in the modified images that it does not have in real-life.

The computer vision module 21 may be provided via hardware, software or a combination of hardware and software. The augmented reality module 23 may be provided via hardware, software or a combination of hardware. Although the computer vision module 21 and the augmented reality module 23 are described and shown as separate they may be integrated as a single module.

The display 22 is configured to display automatically the modified images to simulate an augmented reality. When the user views the displayed images the functionally limited apparatus 10 appears to have functionality that it does not have in real-life.

The display 22 may operate as a viewfinder when displaying the modified images. A viewfinder in this sense displays images contemporaneously with their capture, that is, with a latency that is not perceptible to a human or is not distracting to a human.

In this example, the imaging apparatus 20 comprises the circuitry 26 which provides the computer vision module 21 and the augmented reality module 23. In some other examples, it may be possible for the computer vision module 21 and/or the augmented reality module 23 to be out-sourced to a remote server.

Fig 2A schematically illustrates the display 22 of the remote apparatus 20 in the absence of augmented reality and Fig 2B schematically illustrates the display 22 of the remote apparatus 20 in the presence of augmented reality 30. This is done for the purpose of illustrating the consequence of augmented reality 30. Normally, augmented reality 30 would be automatically triggered and the user would only be presented with the situation illustrated in Fig 2B and not presented with the situation illustrated in Fig 2A.

The computer visible features 14 are configured to automatically trigger, at the imaging apparatus 20, simulation of an augmented reality 30. In the simulated augmented reality 30 the functionally limited apparatus 10 has functionality present in a functional apparatus in real-life but absent from the functionally limited apparatus 10 in real-life.

In Fig 2A augmented reality is absent and the display 22 of the imaging apparatus 20 is displaying images captured by the imaging apparatus 20 without modification.

The user of the imaging apparatus 20 has directed the imaging apparatus 20 so that the images capture a whole of the limited functionality apparatus 10.

At least some of computer visible features 14 are present in the images of the limited functionality apparatus 10. The computer visible features illustrated in Fig 2A are merely illustrative as to form and location. Other examples are possible.

Some of the computer visible features 14 are display features positioned at predetermined locations relative to a display portion 16 of the limited functionality apparatus 10. The display portion 16 is a portion of the body 12 that does not operate as a display but is positioned and sized to correspond to where an operational display would be located in a functional apparatus. The display portion 16 operates as a blank or canvas where augmented reality content may be shown when augmented reality 30 is active.

The display features 14 are configured to position an augmented reality output at the remote apparatus 20 such that it coincides with the display portion 16.

Referring to Fig 4, the computer vision module 21 is configured to identify predetermined computer visible features 14 positioned at predetermined locations relative to the functionally limited apparatus 10.

The arrangement of computer visible features 14 in an image enables the computer vision module 21 to determine the presence of the functionality
limited apparatus 10, the location of the functionality limited apparatus 10 within the images and the orientation of the functionality limited apparatus 10 within the images.

The augmented reality module 23 may simulate a state machine of the functional apparatus. It can recognise augmented reality inputs and change a state of the simulated state machine accordingly. Different states may have different display outputs 32. The display output 32 for a particular state may vary in time, for example, it may be an animation or video.

The augmented reality module 23 is configured to modify the captured images to simulate the display output 32 of the functional apparatus, as illustrated in Fig 2B.

The augmented reality module 23 is configured to modify the captured images such that the simulated display output 32 coincides with the display portion 16 of the functionally limited apparatus 10 in the modified images. The display features 14 are used to position, within the modified images, additional replacement information that coincides with the display portion 16 to produce the simulated display output 32.

The display output 32 associated with a particular simulated state of the functional apparatus may need to be transformed so that it fits the display portion 16 taking into account the size and orientation of the display portion 16 determined by the computer vision module 21 using the computer visible features 14.

Some of the computer visible features 14 are user input features positioned at predetermined locations relative to user input portions 18 of the limited functionality apparatus 10. A user input portion 18 is a portion of the body 12 that does not operate as a user input in real-life but is positioned and sized to correspond to where an operational user input would be located in a functional apparatus in real-life. The user input portion 18 is a portion of the body 12 that operates as a user input in the augmented reality 30.

The user input features are thus configured to enable recognition of augmented reality input at the functionality limited apparatus 10 as illustrated in Fig 2C. The user input features are configured to enable recognition, within images captured and displayed by the imaging apparatus 20, that user movement within the displayed image corresponds to user input (in augmented reality 30, but not in real-life) at a user input portion 18 of the functionally limited apparatus 10.

The augmented reality module 23 is configured to recognize augmented reality user input at a user input portion 18 of the functionality limited apparatus 10. The location, size and function of the user input portions 18 may change with the state of the simulated state machine.

The augmented reality module 23 is configured to recognize a particular augmented reality user input, for a particular state, and respond accordingly, as illustrated in Fig 2D.

This response may, for example, not cause a change in state but may cause a change in the additional replacement information that coincides with the display portion 16 to produce the simulated display output 32. Alternatively, this may, for example, cause a change in state and a change in the additional replacement information that coincides with the display portion 16 to produce the simulated display output 32.

In this way, the augmented reality module 23 produces in the display 22 an augmented reality 30 in which the functionally limited apparatus 10 provides a response to the user input that is the same as a response of the functional apparatus to the user input.

Fig 3 illustrates an adhesive sticker 40 that comprises on an exterior surface 42 computer visible features 14. The adhesive side of the sticker may be applied to the functionally limited apparatus 10 to add computer visible features 14 to the functionally limited apparatus 10.

The sticker 40 may be sized so that it is the same size as the display portion 16. The computer visible features 14 on the sticker 40 may comprise display features and/or user input features.

In some examples, but not necessarily all examples the computer visible features 14 over the display portion 16 may be provided by a graphic representing a still photograph of an output of the display of the functional apparatus. This may be the case whether or not the computer visible features are provided by a sticker 40. The graphic may for example include images of icons, which are then animated in the augmented reality 30.

In some examples, but not necessarily all examples the computer visible features 14 may be features that differentiate the limited functionality apparatus 10 from the functional apparatus 10 when the functional apparatus is not in use and/or when the functional apparatus is in use. For example, the
the computer visible features 14 may be unique to the limited functional apparatus 10.

Fig 5 illustrates another example of the remote imaging apparatus 20. It is similar to the example apparatus 20 illustrated in Figure 4 and similar references are used to denote similar features.

In this example, the circuitry 26 which operates as a controller comprises a processor 29 and a memory 25. However, implementation of the controller could be in hardware alone (a circuit, a processor...), have certain aspects in software including firmware alone or can be a combination of hardware and software (including firmware). The controller may be implemented using instructions that enable hardware functionality, for example, by using executable computer program instructions in a general-purpose or special-purpose processor that may be stored on a computer readable storage medium (disk, memory etc) to be executed by such a processor.

The processor 29 is configured to read from and write to the memory 25. The processor 29 may also comprise an output interface via which data and/or commands are output by the processor 29 to the display 22 and an input interface via which data and/or commands are input to the processor 29 from the camera 24.

The memory 25 stores a computer program 27 comprising computer program instructions (computer program code) that controls the operation of the apparatus 20 when loaded into the processor 29. The computer program instructions, of the computer program 27, provide the logic and routines that enables the apparatus to perform the functions of the computer vision module 21 and the augmented reality module 23 as previously described. The processor 29 by reading the memory 25 is able to load and execute the computer program 27.

The apparatus therefore comprises: at least one processor 29; and
at least one memory 27 including computer program code 27
the at least one memory 25 and the computer program code 27 configured to, with the at least one processor 29, cause the apparatus 20 at least to perform: causing analysis of captured images to locate within the captured images a limited functionality apparatus;
causing modification of the images to augment the apparent functionality of the functionally limited apparatus in the modified images; and
causing display of the modified images to provide an augmented reality 30.

The computer program when loaded into a processor enables:
causing analysis of captured images to locate within the captured images a limited functionality apparatus 10;
causing modification of the images to augment the apparent functionality of the functionally limited apparatus 10 in the modified images; and
causing display of the modified images to provide an augmented reality 30.

The augmented reality 30 produced by the augmented reality module 30 in the display 22 may simulate a user interface of the functional apparatus simulating both user output at the functional apparatus and user input at the functional apparatus as previously described.

The computer program 27 may arrive at the apparatus 20 via any suitable delivery mechanism 31. The delivery mechanism 31 may be, for example, a non-transitory computer-readable storage medium, a computer program product, a memory device, a record medium such as a compact disc read-only memory (CD-ROM) or digital versatile disc (DVD), an article of manufacture that tangibly embodies the computer program 27. The delivery mechanism may be a signal configured to reliably transfer the computer program 27. The apparatus 20 may propagate or transmit the computer program 27 as a computer data signal.

Referring back to Fig 1, the system 1 may comprise a computer program download system 11 configured to enable download to an apparatus 20 of the computer program 27. In this example, the computer program download system 11 may be a near-field-communication tag that enables the apparatus 20 to download the computer program using a radio transceiver 28.

Although the memory 25 is illustrated as a single component it may be implemented as one or more separate components some or all of which may be integrated/removable and/or may provide permanent/semi-permanent/ dynamic/cached storage.

Although the processor 29 is illustrated as a single component it may be implemented as one or more separate components some or all of which may be integrated/removable.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this brief description, reference has been made to various examples. The description of features or functions in relation to an example indicates that those features or functions are present in that example. The use of the term 'example' or 'for example' or 'may' in the text denotes, whether explicitly stated or not, that such features or functions are present in at least the described example, whether described as an example or not, and that they can be, but are not necessarily, present in some of or all other examples. Thus 'example', 'for example' or 'may' refers to a particular instance in a class of examples. A property of the instance can be a property of only that instance or a property of the class or a property of a subclass of the class that includes some but not all of the instances in the class.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An apparatus configured to enable, at a remote apparatus, an augmented reality, the apparatus comprising:
a body; and
computer visible features configured to control augmented reality output at the remote apparatus.

2. An apparatus as claimed in claim 1, wherein the body replicates a body of a functional apparatus in size and shape.

3. An apparatus as claimed in any preceding claim, comprising:
a display portion, wherein at least some of the computer visible features are display features positioned at predetermined locations relative to the display portion.

4. An apparatus as claimed in claim 3, wherein the display features are configured to position an augmented reality output at the remote apparatus such that it coincides with the display portion.

5. An apparatus as claimed in any preceding claim, comprising:
user input portions, wherein at least some of the computer visible features are user input features positioned at predetermined locations relative to the the user input portions.

6. An apparatus as claimed in claim 5, wherein the user input features are configured to enable recognition of augmented reality input at the apparatus.

7. An apparatus as claimed in any preceding claim, wherein the computer visible features are configured to automatically trigger simulation, at the remote apparatus, of an augmented reality in which the apparatus has functionality present in a functional apparatus but absent from the apparatus.

8. A method comprising:
causing analysis of captured images to locate within the captured images an apparatus;
causing modification of the images to augment the apparent functionality of the apparatus in the modified images; and
causing display of the modified images to provide an augmented reality.

9. A method as claimed in claim 8, comprising causing identification of predetermined computer visible features positioned at predetermined locations relative to the apparatus.

10. A method as claimed in claim 8 or 9, comprising causing modification of the captured images to simulate a display output of a functional apparatus that coincides with a display portion of the apparatus in the modified images.

11. A method as claimed in claim 8, 9 or 10, comprising causing recognition of augmented reality user input at the apparatus and to cause provision of an augmented reality in which the apparatus provides a response to the user input that is the same as a response of a functional apparatus to the user input.

12. A computer program configured to control augmented reality output at a remote apparatus to simulate, at the remote apparatus, an augmented reality,
wherein the computer program when loaded into a processor enables performance of a method according to any of claims 8-11.

13. An apparatus comprising means for performing a method according to any of claims 8-11.

14. An in-shop demonstration system comprising:
a first apparatus as claimed in any of claims 1 to 7; and
computer program download system configured to enable download to a second apparatus a computer program as claimed in claim 12.

15. An in-shop demonstration system comprising:
a first apparatus as claimed in any of claims 1 to 7; and
a second apparatus as claimed in claim 13.
